# EUROPEAN PATENT APPLICATION

(11) **EP 4 675 196 A1**
(43) Date of publication of application: **07.01.2026**
(21) Application number: 24382727.6
(22) Date of filing: 05.07.2024
(51) Int. Cl.: F24S 30/425, F24S 30/00

(54) **SOLAR TRACKER WITH ARTICULATED SHAFT**

(71) Applicant: Soltec Innovations S.L., 30500 Molina de Segura Murcia (ES)
(72) Inventor: López Tovar, Carlos, 30500 Molina de Segura (ES); Pajarón Santos, Pablo, 30500 Molina de Segura (ES); Zwingmann, Bernd, 30500 Molina de Segura (ES)
(74) Representative: Pons IP

(57) **Abstract**

The invention relates to a single-shaft solar tracker (5) intended to be located in the heads (3) of a plurality of piles (4), wherein the piles are separated by spans and are fastened in the terrain, the solar tracker being **characterised** in that the shaft (5) comprises at least one flexible connection (1) located at a distance from one of the piles (4) comprised between 5% and 25% of the length of the span in which it is located.

## Description

### OBJECT OF THE INVENTION

The present invention relates to a solar tracker that connects a plurality of piles with the particular feature that it incorporates flexible connections in the shaft at points located between the piles wherein the bending moment is close to zero.

### BACKGROUND OF THE INVENTION

The implementation of solar installations has become a viable solution for lands that are not agriculturally productive or that, even if they are, have favourable conditions that make installations of this type economically profitable. These lands are studied from the orographic point of view and are prepared for the installation of piles or posts that will support a shaft with a solar tracker on which the solar panels are installed. The shaft is aligned in a north-south direction while the solar tracker enables it to rotate with respect to the piles and thus follow the sun in its movement with respect to the solar panels in an east-west direction, increasing profitability in terms of energy capture.

Since the length of the shaft that incorporates the solar panels is long, the shaft rests on several piles. In this way, the study carried out on the land where the piles are to be installed is followed by a preparation that normally requires earthworks based on clearings and embankments to leave the land within a limited roughness in the north-south direction, below the shaft.

Alternatively, in order to avoid the cost and time involved in earthworks, the engagement depth of each of the piles can be studied so that the shaft is aligned in all of them. The problem with this solution is that some piles are very long, which makes their construction unviable, at least from an economic point of view. Furthermore, the works undergo variations from their theoretical implementation to the final real practical implementation, which does not ensure the alignment of the heads of the piles.

A development aimed at eliminating this problem consisted of implementing couplings in the heads of the piles. These couplings are ball joints or spherical bearings, such that the misalignment of the shafts between different piles could be played with.

Document US2012180845A1 represents this solution. It discloses a solar energy collection system that may can include support devices configured to accommodate misalignment of components during assembly. For example, the system can include piles fixed to the earth and an adjustable bearing assembly at the upper end of the pile. The adjustable bearing assembly can include at least one of a vertical adjustment device, a lateral adjustment device and an angular adjustment device.

However, the location of the couplings in the head of the piles themselves creates a series of limitations and structural problems that require the installation to be oversized.

### DESCRIPTION OF THE INVENTION

In order to solve the aforementioned problems, the present invention discloses a solar tracker that simply adapts to the terrain.

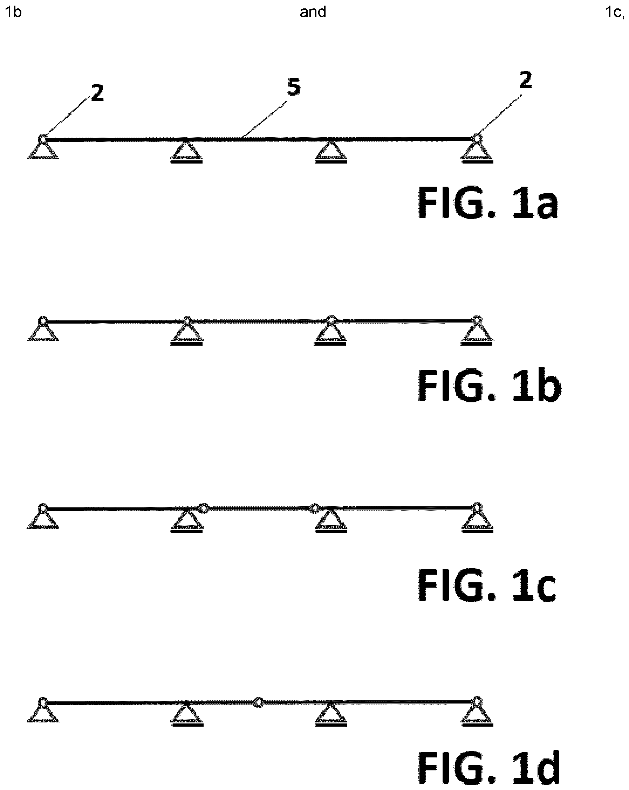

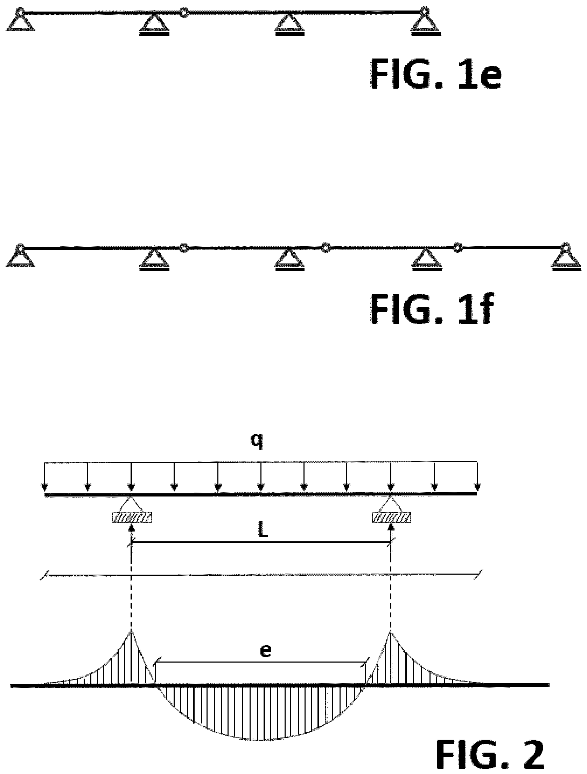

Figures 1 represent a series of generic situations that can occur to obtain different behaviours in terms of deformations of loaded beams.

From a structural point of view, the solar trackers that are supported on piles behave in terms of bending like a continuous beam, that is, the lateral spans reduce the deflections of a central span. This situation is represented in Figure 1a.

Structurally speaking, and considering a uniformly distributed constant load, the deformation of the beam in this situation is 1/384 * q*L^4/EI.

If this situation is modified to implement flexible connections in each of the piles, as represented in Figure 1b, the structure behaves like a simply supported beam where the same deflection occurs in each span and where, in addition, the deflections are independent.

In this case, the deformation of the beam is 1/76.5 * q*L^4/EI.

The incorporation of flexible connections implies that the transmission of shear and torsional forces are transmitted in their entire magnitude, while axial forces depend on the situation and the bending moment is not transmitted.

However, the beam can also have flexible connections outside the supports, on the shaft itself. This situation is represented in Figure 1c. It is similar to the behaviour of a Gerber beam, that is, a multi-span beam provided with flexible connections so that the applied loads are distributed isostatically. In this case, the flexible connections do not coincide with the supports, as in the previous case, but are located in intermediate areas between the piles.

In this case, the deformation of the beam is the same as in the second case, 1/76.5 * q*L^4/EI.

Another situation occurs when the flexible connection is in the middle of a span, as represented in Figure 1d. In this case, the deformation of the beam is 1/128 q*L^4/EI.

The case considered in the invention consists of a mixture of the previous situations, as represented in Figure 1e. In this case, the deformation of the beam, as in the cases of Figures 1b and 1c, is also 1/76.5 * q*L^4/EI.

It must be taken into account that the formulae used are approximate.

Thus, in this case the beam has flexible connections, but with a couple of important limitations. One of them is that the location of the flexible connection seeks to be located in an area where the shaft is subjected to a minimum bending moment, preferably zero, with these points being separated by a distance e, as shown in Figure 2. These locations are located at a distance from the supports of between 5% and 25% of the length of the shaft between supports and, more precisely, between 10% and 20%, depending on the distribution of loads and the configuration of the rigidity of the axle spans.

Another limitation consists of the relationship between the number of flexible connections and piles. Figure 1f shows a case in which the incorporation of a flexible connection for each section between supports can result in a tilting effect where each section rotates about the support existing between each two flexible connections. This situation leads to a non-rigid behaviour, especially considering dynamic effects. For this reason, it is desirable that in several consecutive sections between flexible connections, at least one of them incorporates more than one pile.

In summary, a beam with flexible connections, such as those in Figures 1b, 1c and 1e, presents a deformation 5 times greater than a beam without them, such as that in Figure 1a. This result especially affects dynamic loads.

When considering the support in the centre of the span, as in Figure 1d, the deformation improves 1.7 times compared to having flexible connections in other locations, although it is impaired almost 3 times more than having flexible connections in the supports.

In this way, the most favourable cases regarding the behaviour of the beam in terms of load deformations occur when they occur with beams without flexible connections. However, flexible connections are necessary in order to adapt a solar tracker of certain dimensions to the terrain. An alternative would be if solar trackers of a length shorter than the necessary section between two flexible connectors are considered, although this solution is much less economical and practical.

The difference between the case of Figures 1 b and 1e, that is, of a beam with flexible connections in the supports and a beam with flexible connections outside the supports, in the aforementioned locations, is the need in the first case for the beam to absorb the maximum bending moment in the centre of the span between supports, while in the second case the bending moment is distributed between the area of the support and the centre of the span where it is smaller and, therefore, the deflection is smaller.

In this way, the beam of the invention, as shown in Figure 1e, can be dimensioned with lower requirements than in any of the remaining situations, resulting in an advantage in terms of cost not only material cost, but of everything involved in the installation of larger component structures such as logistics, assembly, etc.

This is the main advantage of the invention, although there are also others, such as those cited below.

A first advantage is that the flexible connections used in the heads of the piles are of the spherical bearing type, while those of the invention need only be cardan-type flexible connections, with fewer technical and maintenance requirements. If both types of flexible connections are used, the distinction between the two types facilitates installation and improves the robustness of the tracker.

A second advantage is that the new configuration adapts to the terrain, without having to do so much earthwork, and may even eliminate it. The terrain is increasingly complex and the market trend is to make longer and longer trackers, which means that the earthworks are increasingly greater in order to align the trackers, which makes the project more expensive. Thus, the earthworks required in the solar trackers currently used mean that in many cases projects are rejected because they are not economically viable. The solar tracker of the invention even enables projects to be carried out in complicated terrain that had not been considered before.

Another advantage is that the problem of excessive slopes in the terrain is eliminated. The flexible connections currently used and located in the piles themselves have a problem in terms of the limitation of the inclination they can obtain.

With respect to a solar tracker without joints, the present invention saves earthworks and simplifies the installation by making an alignment by sections.

Another advantage is that the flexible connections used do not coincide with the simple supports of the piles, which gives the installer much more flexibility during assembly thanks to a greater pile tolerance, without having to worry excessively about the magnitude of the engagement of the piles.

In this way, the solar tracker of the invention solves the problem of the need to carry out earthworks, allowing the piles to be installed in steep and rocky terrain, no matter how complicated it may be.

By way of summary, the invention relates to a solar tracker fastened to a plurality of piles (4) in the area of the heads. The piles are spaced apart by spans and fastened to the terrain at a sufficient depth for the fastening to be stable.

The spans that separate two consecutive piles are usually similar, although they do not have to be the same length, depending on several factors, such as the orography of the terrain where they are implemented.

The invention comprises at least one flexible connection located at a distance from one of the piles between 5% and 25% of the length of the span in which it is located. Preferably, this distance is between 10% and 20%.

The solar tracker can incorporate several flexible connections. In this case, the shaft of the solar tracker is divided into sections, a section being the length between two flexible connections or between one of them and the closest end of the shaft.

Preferably, at least one pile is located in a section. In any case, it is preferable that in several consecutive sections between flexible connections, at least one of them incorporates more than one pile.

In this way the tilting effect of the structure is avoided.

The flexible connection may be a universal joint.

The solar tracker can be associated with a single or several tracking shaft(s) and arranged in a row or in several rows where each row can have its own tracking.

In addition, the flexible connection can also be a hinge with more than one shaft, a constant-velocity joint or even an additional element coupled to the shaft with a lower rigidity than that of the shaft through which torque and misalignment of the shaft are transmitted.

### DESCRIPTION OF THE DRAWINGS

As a complement to the description provided herein, and for the purpose of helping to make the features of the invention more readily understandable, in accordance with a preferred practical exemplary embodiment thereof, said description is accompanied by a set of drawings constituting an integral part of the same, wherein by way of illustration and not limitation, the following has been represented:
Figure 1a shows a side view of a simply supported continuous beam.
Figure 1b shows a side view of a beam articulated in all supports.
Figure 1c shows a side view of a Gerber beam simply supported on several intermediate supports with flexible connections at intermediate points.
Figure 1d shows a side view of a beam simply supported on several intermediate supports with a flexible connection at a central point of a span.
Figure 1e shows a side view of a beam simply supported on several intermediate supports with a flexible connection at a point close to the support.
Figure 1f shows a side view of a beam simply supported on several intermediate supports with a flexible connection at an intermediate point of each span.
Figure 2 shows a beam simply supported on two supports with the bending moment diagram.
Figure 3 shows a side view of a solar tracker with a plurality of piles in terrain with various inclinations.
Figure 4 shows a plan view of the solar tracker shown in figure 3.
Figure 5 shows a side view of a spherical bearing located on a pile and passed through by a shaft that supports solar panels.
Figure 6 shows a perspective view of a shaft housed in the spherical bearing located in the head of a pile that supports solar panels and that incorporates a flexible connection.
Figure 7 shows a side view of figure 6 where the flexible connection is absorbing a slope.
Figure 8 shows a perspective view of a flexible connection.
Figure 9 shows an exploded perspective view of a flexible connection.
Figure 10 shows a perspective view of a spherical bearing used in the head of the piles.
Figure 11 shows an exploded perspective view of the elements of the spherical bearing shown in figure 10.

A list is provided below of the different elements represented in the figures with the numerical references associated therewith:
- 1.: Flexible connection.
- 2.: Spherical bearing.
- 3.: Head of the pile.
- 4.: Pile.
- 5.: Shaft.
- 6.: Solar panels.
- 7.: Forks.
- 8.: Cross-piece.
- 9.: Lugs.
- 10.: Pins.
- 11.: Inner sleeve.
- 12.: Opening.
- 13.: Projections.
- 14.: Outer sleeve.
- 15.: Clamp.
- 16.: Support.

### PREFERRED EMBODIMENT OF THE INVENTION

The present invention refers to a solar tracker that comprises a shaft (5) that connects a plurality of piles (4) with the particular feature that the shaft (5) has a flexible connection (1) at points located between the piles (4).

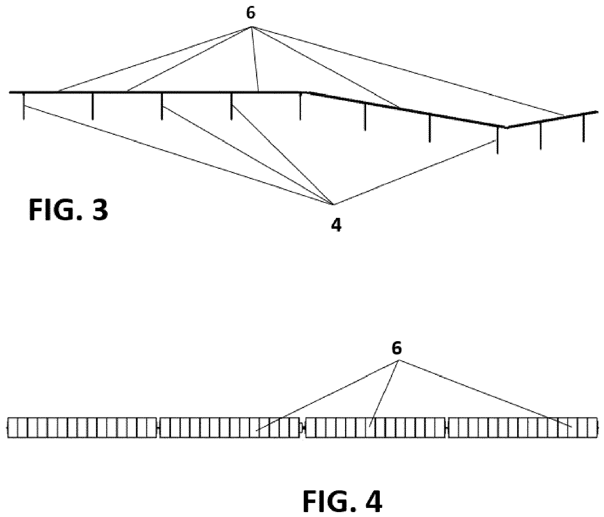

As represented in Figure 3, the solar tracker of the invention is configured to solve the problems due to uneven orography in which the piles (4) have the heads (3) at different heights, such that the shaft (5) that is fastened on the heads (5) is not aligned.

Figure 4 represents a plan view of the solar tracker of Figure 1, with the solar panels (6) aligned.

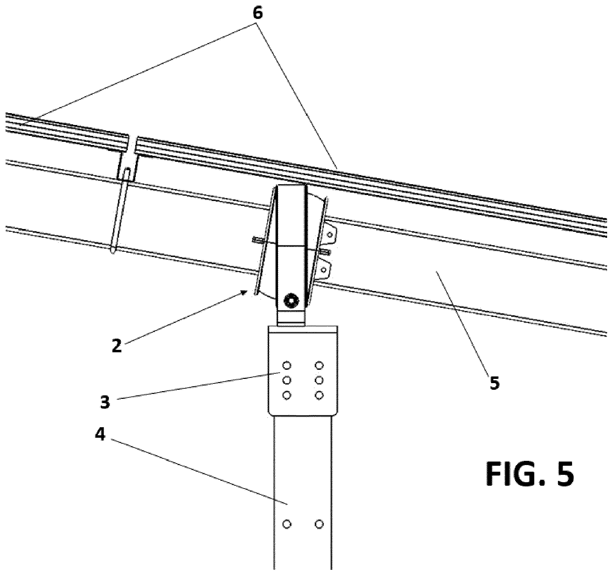

Figure 5 shows how the spherical bearing (2) acts, allowing the shaft (5) to be in a variable position in three dimensions with respect to the pile (4).

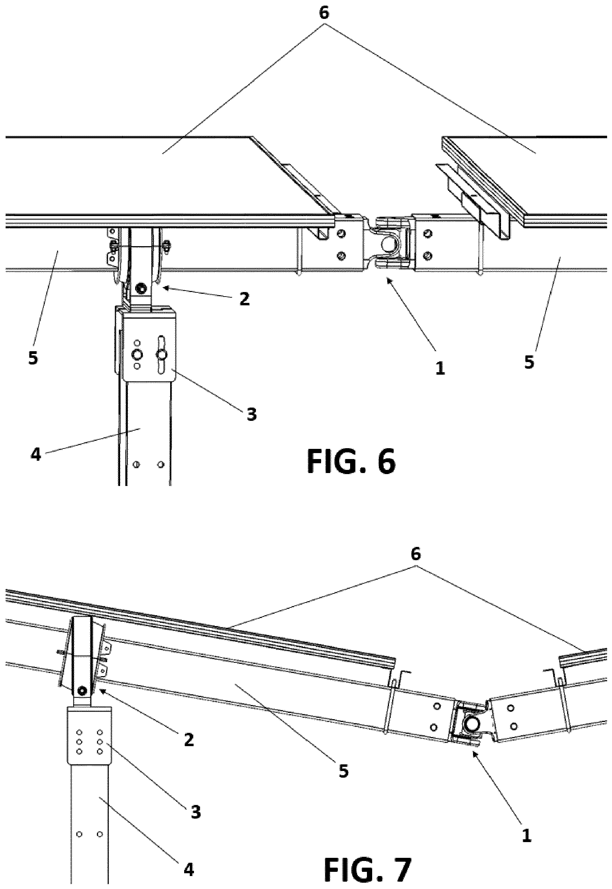

Figures 6 and 7 shows, in addition to the shaft (5) passing through a spherical bearing (2) located in the head (3) of a pile (4) shown in Figure 5, a flexible connection (1) located between two groups of solar panels (6) fastened to the shaft (5) on each side of the flexible connection (1) in an aligned and inclined position, respectively.

These figures show that the flexible connection (1) is located close to the pile (4), with the aim of being located in a place on the shaft (5) where the bending moment is minimal. This location is between 5% and 25% of the length of the shaft (5) from the pile (4) and, more precisely, between 10% and 20%, depending on the load distribution.

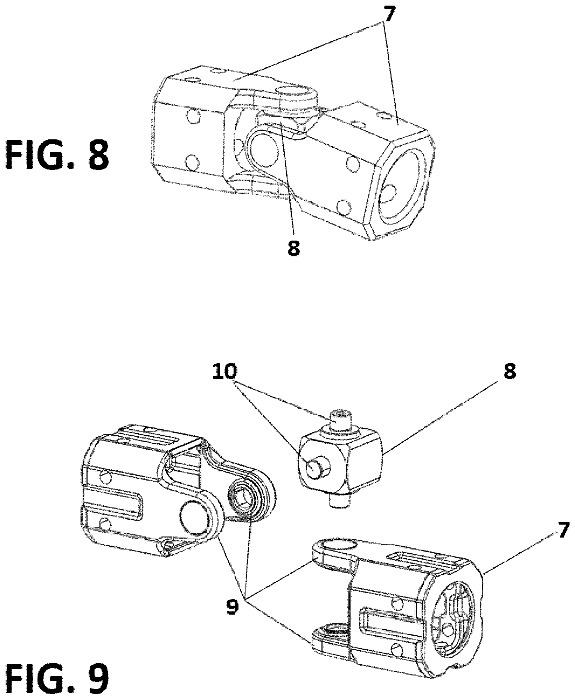

Figures 8 and 9 show a flexible connection (1) assembled and exploded, respectively. The flexible connection (1) is made up of two forks (7) and a cross-piece (8) that connects them. Each of the forks (7) has two lugs (9) drilled and facing each other intended to house two pins (10) that incorporate the cross-piece (8).

Each of the forks (7) is assembled on a section of the shaft (5) such that each of the sections can rotate with respect to the other section to position itself, overcoming a misalignment. The flexible connection (1) enables this misalignment to be in two directions.

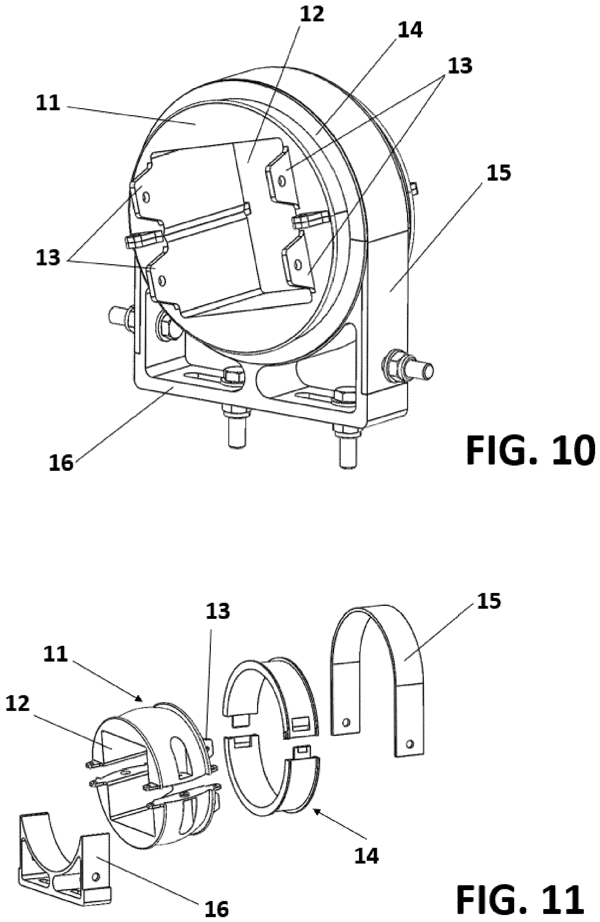

Figure 10 represents the spherical bearing (2) that is located in the head (3) of a pile (4). The spherical bearing (2) is formed by an inner sleeve (11) with an opening (12) intended to house a shaft (5) and which further comprises projections (13) to be fastened to the shaft (5) by means of screws and ensure the shaft (5) is securely attached to the flexible connection (1). The inner sleeve (11) is housed in an outer sleeve (14) which is surrounded by a clamp (15) that is fastened to a support (16) by means of which the flexible connection (1) is fastened to the head (3) of the pile (4).

Figure 11 shows the exploded spherical bearing (2). It is made up of an inner sleeve (11), an outer sleeve (14), a clamp (15) and a support (16). The inner sleeve (11) can be formed by a single piece but, in this case, it is formed by two pieces that, when assembled, leave an opening for the insertion of a shaft (5), having an annular configuration. It also has two pairs of projections (13) with holes for inserting screws that allow it to be fastened to the shaft (5) and thus ensure that it remains securely fastened to the spherical bearing (2).

The outer sleeve (14) has an annular configuration and is formed by two pieces that are assembled by clasping the inner sleeve (11). To achieve three-dimensional relative movement between the inner sleeve (11) and the outer sleeve (14), the outer surface of the inner sleeve (11) is spherical shaped, as does the inner surface of the outer sleeve (14), such that the two surfaces are complementary so that they slide with respect to one another.

The clamp (15) is responsible for fastening the two sleeves (11, 14) to the support (16). To do so, it clasps the outer sleeve (14) along a half circumference and extends on both sides to overlap with the support (16) and can be fastened with screws. The support (16) clasps the outer sleeve (14) on the other half circumference to remain completely securely attached.

The support (16) has a circular seat shape for the outer sleeve (14) with a base that incorporates holes for the insertion of screws by means of which the spherical bearing (2) is fastened to the head (3) of a pile (4).

The outer surface of the inner sleeve (11) is spherical and complementary to the inner surface of the outer sleeve (14), such that the inner sleeve (11) can rotate about the outer sleeve (14). In this way, the shaft (5) can be oriented three-dimensionally with respect to the pile (4).

## Claims

1. A solar tracker comprising a shaft (5) intended to be located in the heads (3) of a plurality of piles (4), wherein the piles (4) are separated by spans and are fastened in a terrain, the solar tracker being **characterised in that** the shaft (5) comprises at least one flexible connection (1) located at a distance from one of the piles (4) comprised between 5% and 25% of the length of the span in which it is located.

2. The solar tracker of claim 1, wherein the shaft (5) comprises a plurality of flexible connections (1) and the number of piles (4) between two flexible connections (1) is at least one.

3. The solar tracker of claim 1, wherein the distance from the flexible connection (1) to one of the piles (4) is comprised between 10% and 20% of the length of the span in which it is located.

4. The solar tracker of claim 1, wherein the flexible connection (1) is a universal joint.

5. The solar tracker of claim 1, wherein the flexible connection (1) is a hinge with more than one shaft.

6. The solar tracker of claim 1, wherein the flexible connection (1) is an element coupled to the shaft with a lower rigidity than that of the shaft (5).
